# EUROPEAN PATENT SPECIFICATION

(11) **EP 2 221 238 B1**
(45) Date of publication and mention of the grant of the patent: **04.01.2012**
(21) Application number: 10001487.7
(22) Date of filing: 12.02.2010
(51) Int. Cl.: B62D 21/15, B62D 25/02, B62D 25/20

(54) **A side vehicle-body structure of an automotive vehicle and method of providing the same**
Karosserieseitenstruktur eines Kraftfahrzeugs und Bereitstellungsverfahren dafür
Structure latérale de carrosserie de véhicule d'un véhicule automobile et son procédé de fourniture

(30) Priority: 16.02.2009 JP 2009032478; 17.02.2009 JP 2009033824
(43) Date of publication of application: 25.08.2010
(73) Proprietor: Mazda Motor Corporation, Aki-gun Hiroshima 730-8670 (JP)
(72) Inventor: Fukushima, Yoshio, Aki-gun Hiroshima 730-8670 (JP)
(74) Representative: Müller-Boré & Partner Patentanwälte

(56) References cited:
- EP-A1- 1 982 899
- EP-A1- 2 141 064

## Description

The present invention relates to a side vehicle-body structure of an automotive vehicle, and in particular, relates to a structure of a side sill which is connected to a side body outer panel forming a surface of a lower vehicle body. Further, the invention relates to a method of providing the side vehicle-body structure.

Conventionally, the side sill which extends in the vehicle longitudinal direction is provided below a side face of the vehicle body in the automotive vehicle. This side sill is formed in a structure having a closed cross section, which is comprised of a side sill inner which is arranged on the inside and a side sill outer which is arranged on the outside in the vehicle width direction, aiming at the reduction of vehicle-body weight to ensure the sufficient rigidity of the lower vehicle body.

Meanwhile, a structure which improves an exterior appearance of the side face of the vehicle body with a properly large volume of the lower vehicle body is recently known. Although a structure in which the side sill outer covering the outside of the vehicle body protrudes greatly toward the outside in the vehicle width direction may be considered as possibility of improving the above-described exterior appearance, there may be the flowing problems in this regard.

First, in case the side sill outer has a protrusion portion which protrudes greatly toward the outside, steel-plate portions increase greatly, so that the weight of the vehicle body may increase. This weight increase may cause the cost up as well. Secondly, there is a problem in forming the vehicle body. In the conventional so-called monocoque-body, the side body outer panel which forms the surface around an opening of a side door extends downwardly in the vehicle vertical direction so as to integrally form the side sill outer. Thereby, the side body outer panel and the side sill inner panel are formed at the same time in forming through pressing.

In case of conducting the pressing, an edge area of the member (works) has an inferior processing, compared to a central area of the member (works), from viewpoints of fluidity of the steel-plate material. This inferiority becomes noticeable as the processing area is larger or the processing amount is greater like the vehicle-body surface. Accordingly, in case the protruding portion is formed at the edge area of the large member, such as the side body outer panel, some problem such as cracking may occur in the processing.

Herein, a structure in which a side sill garnish covering the outside is attached to the side sill so as to enlarge the exterior-appearance volume of the lower vehicle body for improving the exterior appearance and design is known as one of solutions of the above-described problem (see Japanese Patent Laid-Open Publication No. 2007-261480).

The above-described publication discloses the structure of a side sill **100** comprising a side sill inner **101**, a side sill outer **102**, and a side sill reinforcement **103** which is provided between the both members **101**, **102** to reinforce the side sill **100**, in which a closed cross section is formed by the side sill inner **101** and the side sill reinforcement **103**, as shown in FIG. **13**. Further, this publication proposes a side sill garnish **104** which extends in the vehicle longitudinal direction on the side sill **100** so as to cover the outside and the lower side of the side sill **100**, wherein the side sill garnish **104** includes a projection portion which comprises a side face portion **105** covering the side face of the side sill **100**, a lower face portion **106** covering the lower face of the side sill **100**, and a concave portion for a jack **107**.

According to the structure of the above-described publication, the exterior appearance may be improved without using any vehicle-body rigidity member. Moreover, it may be restrained that any improper articles, such as sands, come into a space between the side sill and the side sill garnish and drift therein, without any interference between the jack and the side sill garnish. Further, the protrusion of the vehicle-body lower portion toward the outside in the vehicle width direction may improve the resistance of chipping caused by sands, stones or the like during a vehicle traveling, and aerodynamic characteristics by reducing the amount of traveling winds flowing into a wheel house.

However, while it may be possible that the lower portion of the side sill outer is made short so as to be positioned at a relatively upper portion of the vehicle body, the flexibility of designing may not be improved properly by the structure of the above-described publication. That is, a boundary portion between a lower end of a joint face portion of the side sill outer and the side sill reinforcement, i.e., a split line between them, is hidden. Accordingly, it may be necessary that the split line is arranged on the inside of the side sill garnish by extending the lower end of the joint face portion of the side sill outer downwardly, or by extending the projection portion of the side sill garnish upwardly, so that the flexibility of designing may be restricted.

Further, in case of arranging the side sill garnish, a new designing of the side sill garnish and an additional assembling step are necessary, so that there may occur another cost problem than material costs. Additionally, while the side sill garnish may improve the exterior appearance, it may not contribute to improving the vehicle-body rigidity properly.

EP 1 982 899 A1 discloses a floor panel in vehicle, having bead whose inclined surface has gradually-changed inclination angle, its disclosure covers the preamble features of claim 1.

The object of the present invention is to provide a side vehicle-body structure of an automotive vehicle and a corresponding method which can improve the exterior appearance of the boundary portion of the lower end of the side sill outer and/or ensuring the designing flexibility and/or a vehicle-body rigidity.

The object is solved by the features of the independent claims. Preferred embodiments of the present invention are subject of the dependent claims.

According to the present invention, there is provided a side vehicle-body structure of an automotive vehicle, comprising a side body outer panel forming a surface of a vehicle-body side portion, and a side sill extending substantially in a vehicle longitudinal direction and connected to the side body outer panel, wherein the side sill includes a side sill outer which is provided at a lower portion of the side body outer panel, a side sill inner which is provided on the inside of the side sill outer in a vehicle width direction, a reinforcement member which is preferably plate-shaped and provided between the side sill inner and the side sill outer and joined to a joint face portion of the side sill outer, and a projection portion which projects substantially toward the outside in the vehicle width direction from the joint face portion, and wherein an upper wall portion of the projection portion is arranged substantially at the same level as a lower end of the joint face portion.

According to the present invention, the exterior appearance of the boundary portion of the lower end of the side sill outer can be improved ensuring the designing flexibility by arranging the side sill outer at the upper portion of the vehicle body. That is, since the upper wall portion of the projection portion is arranged substantially at the same level as the lower end of the joint face portion of the side sill outer, the users may be made recognize the boundary portion and the projection portion as one body. Thereby, the split line of the side sill outer can be made properly unnoticeable, so that the exterior appearance can be improved without extending the lower end of the joint face portion of the side sill outer downward, or extending the projection portion of the side sill garnish upward. Further, even if the projection portion is formed by the frame member of the vehicle body aiming at increasing the vehicle-body rigidity, the boundary portion can be made be recognized by the users as one body with the projecting portion of the vehicle-body member, so that improving both the vehicle-body rigidity and the exterior appearance can be achieved.

According to an embodiment of the present invention, a side door which opens or closes an opening formed at the side body outer panel is provided, and the lower end of the joint face portion of the side sill outer and a lower end portion of the side door are arranged substantially at the same level. Thereby, since the lower end of the joint face portion of the side sill outer and the lower end portion of the side door are arranged substantially at the same level, the joint face portion of the side sill outer can be hidden by the side door when the side door is in its closing state. When the side door is in its open state, the users can be made recognize the boundary portion and the projection portion as one body. Accordingly, the exterior appearance can be further improved.

According to another embodiment of the present invention, the side door has a seal member which seals a space between the side door and the side sill when the side door closes, and the side sill outer includes a seal face portion which an upper portion of the seal member contacts. Thereby, even in case the joint face portion of the side sill outer is arranged at the upper portion of the vehicle body which is close to the position of the lower end of the side door, both improving the exterior appearance and ensuring the proper door sealing can be achieved.

According to another embodiment of the present invention, the side body outer panel includes a wheel house portion which stores a rear wheel at a rear portion thereof and a wheel-house arch portion which forms a substantially continuous surface with the closing side door between the wheel house portion and the side door, and a lower end portion of the wheel-house arch portion is arranged substantially at the same level as the lower end of the joint face portion. Thereby, since the lower end portion of the wheel-house arch portion is arranged substantially at the same level as the lower end of the joint face portion, the lower end portion of the wheel-house arch portion and the lower end of the joint face portion, i.e., the upper wall portion of the projection portion, can be made continuous with the parting line of the side door, thereby further improving the exterior appearance.

According to another embodiment of the present invention, a garnish is provided so as to cover the lower end portion of the wheel-house arch portion and the upper wall portion of the projection portion in an area adjacent to the wheel-house arch portion. Thereby, the joint face portion of the side sill outer and the split line can be covered with the garnish regardless of the design of the wheel-house arch portion, so that the exterior appearance can be improved.

According to another embodiment of the present invention, the projection portion projects toward the outside from an outside boundary face of the rear wheel. Thereby, the improvements of the resistance of chipping caused by sands, stones or the like during the vehicle traveling and the aerodynamic characteristics by reducing the amount of traveling winds flowing into a wheel house can be achieved.

According to another embodiment of the present invention, the projection portion is formed at the plate-shaped reinforcement member and comprised of a protrusion portion which protrudes toward the outside in the vehicle width direction from the joint face portion. Thereby, the improvement of the exterior appearance can be achieved properly with the increase of the vehicle-body rigidity by increasing the closed cross section of the side sill without using the side sill garnish.

According to another embodiment of the present invention, the protrusion portion protrudes toward the outside in the vehicle width direction from the lower end of the side door when the side door closes. Thereby, sands, stones or the like can be surely prevented from scattering to the lower end of the side door.

According to another embodiment of the present invention, the side sill comprises a flange which comprises a lower end portion of the side sill inner and a lower end portion of the plate-shaped reinforcement member, and the protrusion portion comprises a step portion which projects downwardly preferably beyond the flange. Thereby, the flange can be hidden from the vehicle outside, without providing any additional member or changing the shape of the side sill inner.

According to another embodiment of the present invention, the protrusion portion comprises a substantially flat plate portion which extends substantially downwardly on the outside. Thereby, the shape of the side sill can be set properly regardless of the shape or processing conditions of the side body outer panel, thereby improving the designing flexibility.

According to another embodiment of the present invention, the side body outer panel includes a wheel house portion which stores a rear wheel at a rear portion thereof and a wheel-house arch portion which forms a substantially continuous surface with the closing side door between the wheel house portion and the side door, a garnish is provided so as to cover a lower end portion of the wheel-house arch portion and the upper wall portion of the projection portion in an area adjacent to the wheel-house arch portion, and/or the garnish comprises a garnish face portion which is substantially flush with a surface of the wheel-house arch portion and/or the flat plate portion of the protrusion portion. Thereby, the design of the vehicle-body side face can be improved.

According to another embodiment of the present invention, the projection portion is comprised of a side sill garnish which is attached to an outside face of the side sill. Thereby, the projection portion can be easily formed by the side sill garnish.

According to another embodiment of the present invention, the side sill outer is formed integrally with the side body outer panel and/or said projecting portion is formed integrally with said reinforcement member. Thereby, the processing of the vehicle body can be easier.

According to a further aspect, there is provided a method of providing a side vehicle-body structure of an automotive vehicle, comprising the steps of:
providing a side body outer panel forming a surface of a vehicle-body side portion; and
connecting a side sill extending substantially in a vehicle longitudinal direction to said side body outer panel,
wherein said side sill includes a side sill outer which is provided at a lower portion of said side body outer panel, a side sill inner which is provided on the inside of the side sill outer in a vehicle width direction, a reinforcement member which is provided between the side sill inner and the side sill outer and joined to a joint face portion of the side sill outer, and a projection portion which projects substantially toward the outside in the vehicle width direction from said joint face portion,
arranging an upper wall portion of said projection portion substantially at the same level as a lower end of said joint face portion.

According to another embodiment of the present invention the method further comprises the step of forming said reinforcement member such to be substantially plate-shaped.

Other features, aspects, and advantages of the present invention will become apparent from the following description which refers to the accompanying drawings.
FIG. **1** is a side view showing a side vehicle-body structure of an automotive vehicle according to a first embodiment of the present invention.
FIG. **2** is a side view showing the side vehicle-body structure in a state in which a side door is removed according to the first embodiment.
FIG. **3** is an exploded perspective view of the side vehicle-body structure shown in FIG. **2**.
FIG. **4** is a perspective view of a major part of the side vehicle-body structure according to the first embodiment.
FIG. **5** is a sectional view taken along line V-V of FIG. **2**.
FIG. **6** is a sectional view taken along line VI-VI of FIG. **2**.
FIG. **7** is a sectional view taken along line VII-VII of FIG. **2**.
FIG. **8** is a sectional view taken along line VIII-VIII of FIG. **2**.
FIG. **9** is a perspective view of a major part of a side vehicle-body structure according to a second embodiment.
FIG. **10** is a sectional view of the second embodiment, which corresponds to **FIG. 7**.
FIG. **11** is a sectional view of a garnish attaching portion of the second embodiment.
FIG. **12** is a sectional view of a third embodiment, which corresponds to FIG. 6.

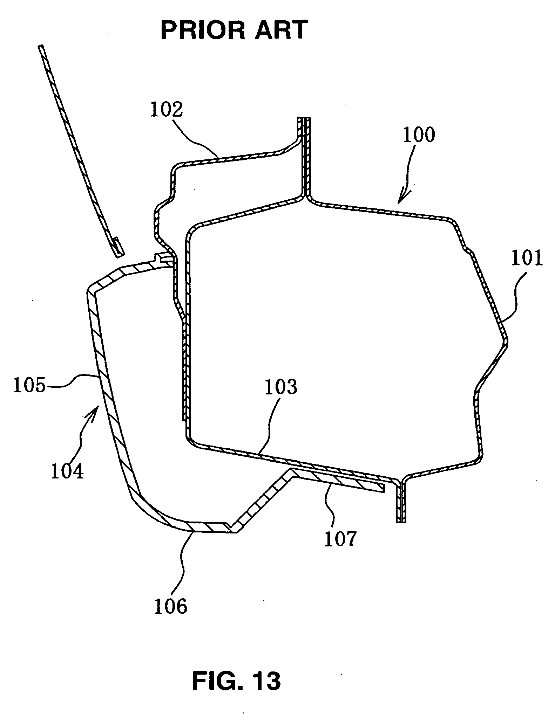

FIG. **13** is an explanatory diagram of prior art.

Hereinafter, preferred embodiments of the present invention will be described. Although the embodiments are described separately, it should be understood that single feature(s) of one embodiment may be combined with another embodiment and vice versa.

### EMBODIMENT 1

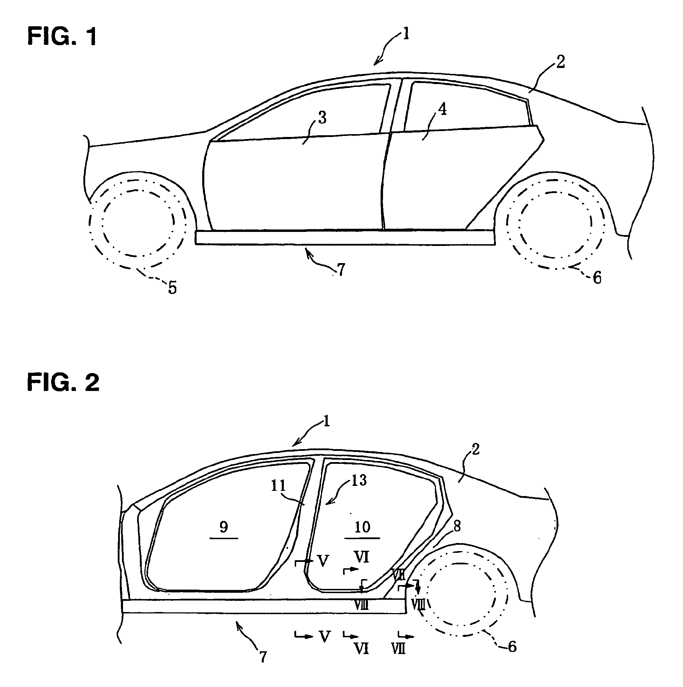

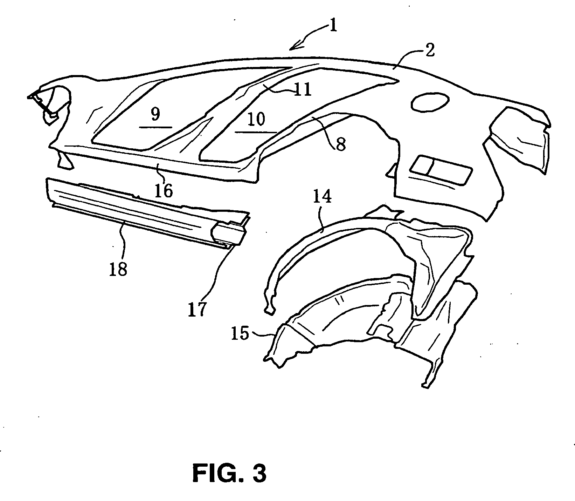

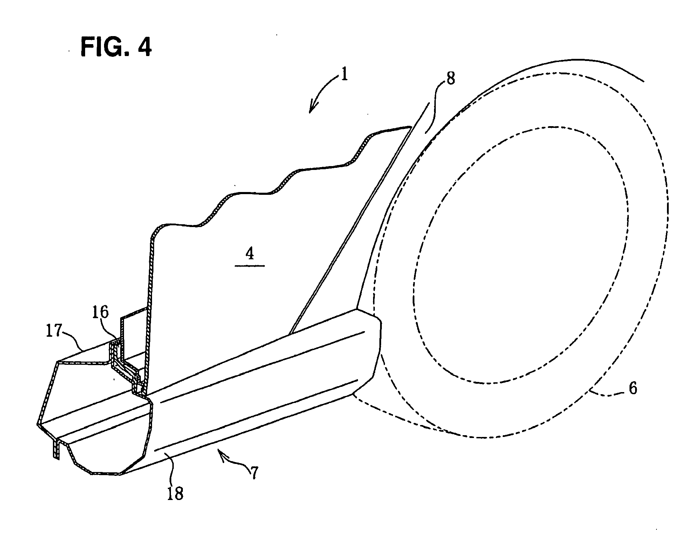

A first embodiment of the present invention will be described referring to the accompanying drawings. FIG. **1** is a side view showing a side vehicle-body structure of an automotive vehicle according to the first embodiment of the present invention. FIG. **2** is a side view showing the side vehicle-body structure in a state in which a side door is removed according to the first embodiment. FIG. **3** is an exploded perspective view of the side vehicle-body structure shown in FIG. **2**. FIG. **4** is a perspective view of a major part of the side vehicle-body structure according to the first embodiment.

As shown in FIG. **1**, a vehicle **1** according to the first embodiment, which is preferably a four door type of passenger vehicle, comprises pairs of side frame outers **2** (side body outer panel), front doors **3**, rear doors **4**, front wheels **5**, and rear wheels **6**. A side sill **7** which is connected to the side frame outer **2** and extends substantially in a vehicle longitudinal direction as a frame member of the vehicle **1** is arranged below the front door **3** and the rear door **4**.

As shown in FIG. **2**, the side frame outer **2** comprises a wheel-house arch portion 8 which is formed in a rear area thereof so as to surround the rear wheel, and a wheel house portion which is formed by a wheel house outer **14** and a wheel house inner 15, which will be described below.

The side frame outer **2** further comprises a front opening **9** for passenger's ingress and egress, to which the front door **3** is pivotally joined, a rear opening **10**, to which the rear door **4** is pivotally joined, and a center pillar outer **11** which is formed between the front opening **9** and the rear opening **10** so as to vertically interconnect an upper end portion and a lower end portion of the side frame outer **2**. Herein, the side frame outer **2** is formed through pressing after blanking of a steel plate having a specified thickness, for example, 0.7mm.

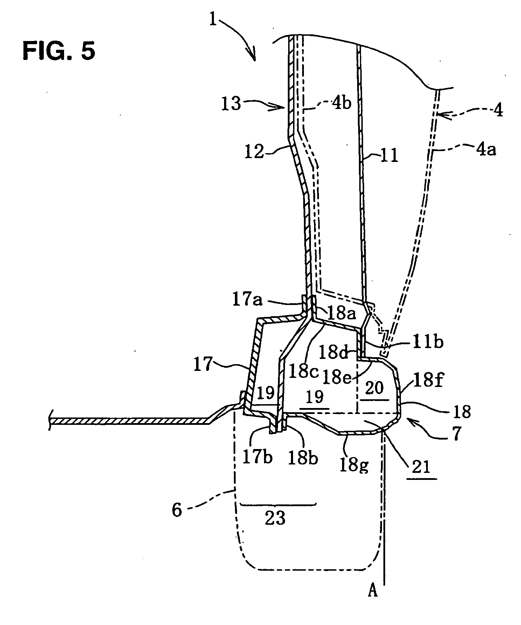

Further, the center pillar outer **11** forms a center pillar **13** having a substantially closed cross section together with a center pillar inner **12** (see FIG. **5**). An upper end portion of the center pillar **13** is connected to a roof side rail having a substantially closed cross section, and a lower end portion of which is connected to the side sill **7**.

As shown in FIGS. **3** and **4**, the wheel house outer **14** which is positioned on the outside and the wheel house inner **15** which is positioned on the inside are arranged inside the wheel-house arch portion **8**. The wheel house outer **14** and the wheel house inner **15** are joined at their both ends and upper ends so as to form a space for storing the rear wheel 6 at their central area.

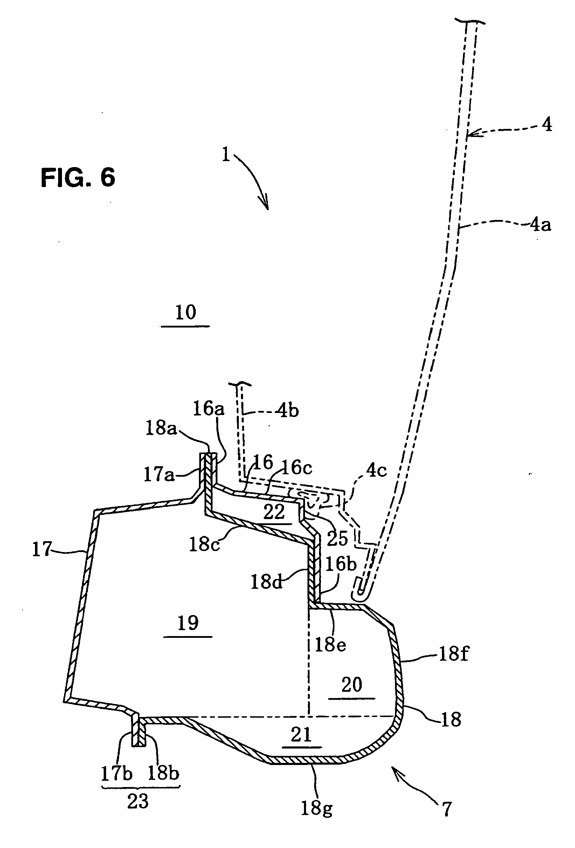

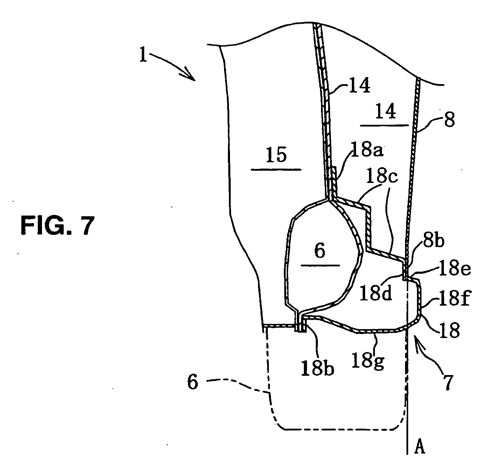

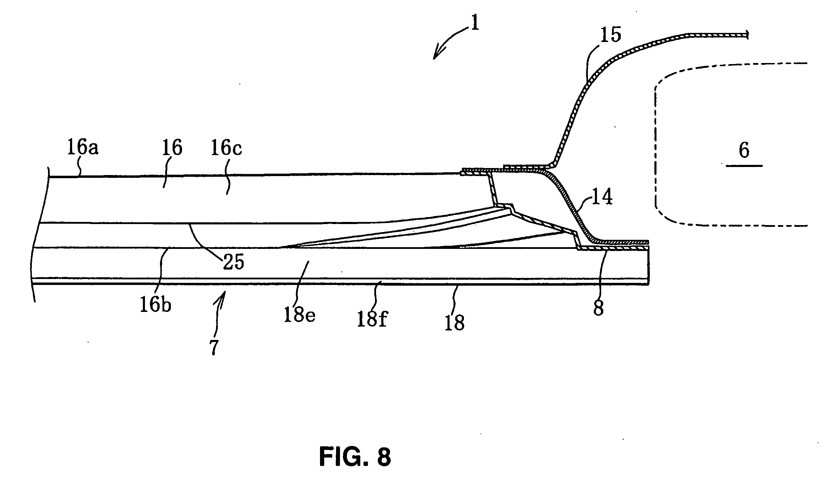

Next, the structure of the side sill **7** will be described referring to FIGS. **5-8**. FIG. **5** is a sectional view taken along line V-V of FIG. **2**. FIG. **6** is a sectional view taken along line VI-VI of FIG. **2**. FIG. **7** is a sectional view taken along line VII-VII of FIG. **2**. FIG. **8** is a sectional view taken along line VIII-VIII of FIG. **2**.

The side sill **7** which is connected to the side frame outer **2** comprises a side sill outer **16** which is formed by the lower portion of side frame outer **2**, a side sill inner **17** which is positioned inside the side sill outer **16**, and a side sill reinforcement **18** (preferably a plate-shaped reinforcement member). The side sill reinforcement **18** is formed through pressing after blanking of a steel plate having a specified thickness, for example, 1.4mm. Herein, the central portion of the side frame outer **2** forms the center pillar outer **11**, and the lower portion of the side frame outer **2** forms the side sill outer **16**.

The hat-shaped side sill reinforcement **18** is arranged between the inside hat-shaped side sill inner **17** and the outside side sill outer **16**, and a first upper flange **17a** and a first lower flange **17b** of the side sill inner **17** are welded to a second upper flange **18a** and a second lower flange **18b** of the side sill reinforcement **18**, respectively. At the lower end of the side sill **7** is preferably formed a flange **23** which is comprised of the first lower flange **17b** of the side sill inner **17** and the second lower flange **18b** of the side sill reinforcement **18**.

The cross section of the side sill reinforcement **18** is comprised of a first upper wall portion **18c** which extends toward the outside continuously from a lower end of the second upper flange **18a**, a flat-shaped joint portion **18d** which extends substantially downwardly continuously from an outside end of the first upper wall portion **18c**, a second upper wall portion **18e** which bends substantially toward the outside from a lower end of the joint portion **18d** and extends substantially horizontally, a flat plate portion **18f** which extends substantially downwardly continuously from an outside end of the second upper wall portion **18e**, and a step portion **18g** which projects downwardly from a lower end of the flat plate portion **18f** preferably beyond a lower end of the second lower flange **18b** and then curves upwardly and connects to an upper end of the second lower flange **18b**. Herein, the first upper wall portion **18c**, the joint portion **18d**, the second upper wall portion **18e**, the flat plate portion **18f**, and the step portion **18g** form respective faces which extend substantially in the vehicle longitudinal direction.

The side sill reinforcement **18** and the side sill inner **17** extend substantially in the vehicle longitudinal direction and form the closed cross section. This closed cross section is comprised of a first closed cross section **19** which is defined by the side sill inner **17**, the first upper wall portion **18c**, the joint portion **18d**, and the second lower flange **18b**, a second closed cross section **20** which is positioned outside the first closed cross section **19** and defined by the second upper wall portion **18e** and the flat plate portion **18f**, and a third closed cross section **21** which is positioned below the first and second closed cross sections **19**, **20** and defined by the step portion **18g**. The second closed cross section **20** projects toward the outside beyond a boundary **A** of the outside face of the rear wheel **6**. Herein, the second closed cross section **20** substantially corresponds to a protrusion portion of the present invention. The first, second and third closed cross sections 19, 20, 21 are further delimited by an imaginary line extending from the joint portion 18d downwards and a further imaginary line extending from the flange 23 outwards (broken lines in Figs. 5 and 6).

As shown in FIG. **5**, the center pillar inner **12** extends downwardly to the welding joint portion of the first lower flange **17b** and the second lower flange **18b** in an area in which the center pillar **13** is provided. That is, the side sill reinforcement **18** and the side sill inner **17** are provided on the both sides of the center pillar inner such that three members of the first upper flange **17a**, the center pillar inner **12**, and the second upper flange **18a** are joined together and three members of the first lower flange **17b**, the center pillar inner **12**, and the second lower flange **18b** are joined together. Thereby, the first closed cross section **19** is divided into two areas of an outside area and an inside area by the center pillar **12** in an area of the center pillar **13**.

A lower end portion **11b** of the center pillar outer **11** extends downwardly to the lower end of the flat-shaped joint portion **18d**, and a lower cross section of the lower end portion **11b** contacts the second upper wall portion **18e**. The inside face of the lower end portion **11b** of the center pillar outer **11** is welded to the outside face of the joint portion **18d**. Thus, the first upper wall portion **18c** forms a node which separates the inside of the center pillar **13** into two areas in the vertical direction of the vehicle body.

As shown in FIG. **6**, a rear opening **10** is formed behind the center pillar **13**. Three members of the first upper flange **17a**, the second upper flange **18a**, and a third upper flange **16a** which forms an edge of the rear opening **10** above a third lower flange **16b** of the side sill outer **16** are welded together.

A projection portion **16c** which extends substantially toward the outside continuously from the lower end of the third upper flange **16a** is arranged facing to the first upper wall portion **18c** and forms a fourth closed cross section **22** together with the first upper wall portion **18c**. The third lower flange **16b** extends downwardly from the outside end of the projection portion **16c**. Herein, the third lower flange **16b** and the lower end portion **11b** extend continuously in the vehicle longitudinal direction, which substantially correspond to a joint face portion of the present invention.

The third lower flange **16b** extends substantially downwardly to the lower end of the flat-shaped joint portion **18d**, and the lower cross section of the third lower flange **16b** contacts the second upper wall portion **18e**. The inside face of the third lower flange **16b** contacts and is welded to the outside face of the joint portion **18d**. Thereby, the lower cross section of the third lower flange **16b**, i.e., the split line can be made be recognized as one body with a starting point of the second closed cross section **20**, i.e., a bending curve line.

Further, the lower end of the rear door **4** which is comprised of a rear door outer **4a** and a rear door inner **4b** is positioned so as to face to the lower end of the joint portion **18d**, i.e., the outside end portion of the second upper wall portion **18e**, so that it is positioned substantially at the same level as the lower cross section of the lower end portion **11b** of the center pillar outer **11**, i.e., the lower cross section of the third lower flange **16b** of the side sill outer **16**. Thereby, when the rear door **4** is closed, the protrusion portion comprised of the second closed cross section **20** and part of the third closed cross section **21** is arranged (exists) between the lower end of the rear door **4** and the ground.

A seal member **4c** which protects the vehicle inside from the water and the like is attached to the lower end face of the rear door inner **4b**. When the rear door **4** is closed, this seal member **4c** contacts a seal face portion **25** which is formed at the outside end portion of the projection portion **16c** so as to ensure sealing.

As shown in FIGS. **7** and **8**, the side sill outer **16** and the side sill reinforcement **18** extend rearwardly in an area of the vehicle rear portion. The rear end area of the side sill reinforcement **18** contacts the wheel-house arch portion 8. The second upper flange **18a** and the second lower flange **18b** contact the outside face of the wheel house outer **14**, respectively, and these members and the wheel house inner **15** are joined together.

As shown in FIG. **8**, the side sill outer **16**, the seal portion **25**, the second upper wall portion **18e**, and the flat plate portion **18f** are recognized in the plan view. A front lower end portion **8b** of the wheel-house arch portion **8** is arranged, like the third lower flange **16b** of the side sill outer **16**, so as to contact the second upper wall portion **18e** of the side sill reinforcement **18** and to be welded to the outside face of the joint portion **18d**. Thus, the lower cross section of the lower end portion **8b** is configured to be continuous with the parting line of the rear door **4**.

The second upper wall portion **18c** preferably has a two-stage structure with an upper wall and a lower wall so as to enlarge its contact area with the wheel-house arch portion **8**. The second closed cross section **20**, which is defined by the second upper wall portion **18e** and the flat plate portion **18f**, in an area of the vehicle front portion in front of the wheel-house arch portion **8** projects toward the outside beyond the boundary **A** of the outside face of the rear wheel **6**, when viewed from the front of the vehicle **1**.

Hereinafter, the operations and advantages of the side vehicle-body structure according to the first embodiment will be described.

Since the second closed cross section **20** which projects toward the outside beyond the third lower flange **16b** of the side sill outer **16** and the lower end portion **11b** is provided, and the lower cross sections of the third lower flange **16b** and the lower end portion **11b**, i.e., the split line contacts the second upper wall portion **18e** which forms the second closed cross section **20**, the split line of the side sill outer **16** can be made properly unnoticeable, so that the exterior appearance can be improved.

Further, since the side sill outer **16** is arranged at the upper portion of the vehicle body, the protruding portion can be formed by the side sill reinforcement **18**, not by the side sill outer **16**, so that the designing flexibility of the protrusion portion can be improved.

Further, since the second closed cross section **20** and the third closed cross section **21** are formed by the side sill reinforcement **18** of the frame member of the vehicle body, the split line can be made be recognized as one body with the second closed cross section **20**, so that improving both the vehicle-body rigidity and the exterior appearance can be achieved.

Since the lower cross sections of the third lower flange **16b** and the lower end portion **11b** and the lower end portion of the side door **4** are arranged substantially at the same level, when the rear door **4** is in its closed state, the joint face portion of the side sill outer **16** can be hidden by the rear door **4**, and when the side door **4** is in its open state, the users can be made recognize the split line and the second closed cross section **20** as one body.

Moreover, since the second closed cross section **20** is formed at the side sill reinforcement member **18** and protrudes toward the outside in the vehicle width direction from the third lower flange **16b** and the lower end portion **11b**, the vehicle-body rigidity can be improved by increasing the area of the closed cross section of the side sill **7** without using the side sill garnish or other members, and the resistance of chipping during the vehicle traveling and the aerodynamic characteristics can be improved.

Since the side sill outer **16** includes the seal face portion **25**, the upper portion of which the seal member **4c** contacts, even in case the third lower flange **16b** is arranged at the upper portion of the vehicle body which is close to the position of the lower end of the rear door **4**, both improving the exterior appearance and ensuring the proper door sealing can be achieved.

Since the lower end portion **8b** of the wheel-house arch portion **8** is arranged substantially at the same level as the lower cross sections of the third lower flange **16b** and the lower end portion **11b**, the lower end portion **8b** of the wheel-house arch portion **8** and the second upper wall portion **18e** which forms the second closed cross section **20** can be made continuous with the parting line of the rear door **4**, thereby further improving the exterior appearance.

### EMBODIMENT 2

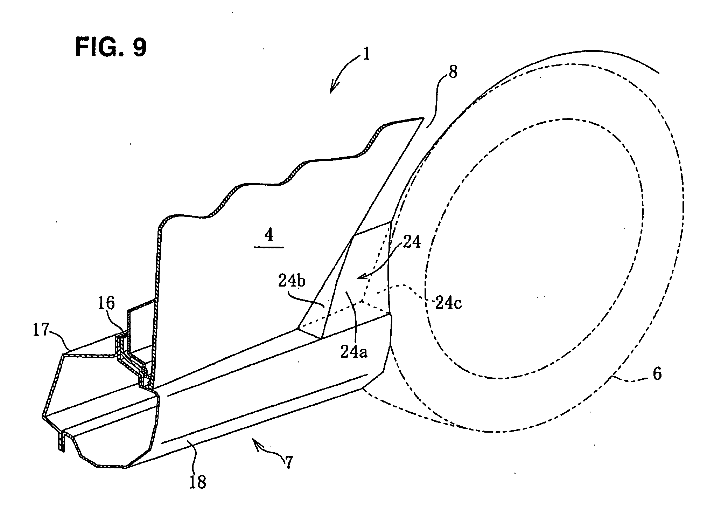

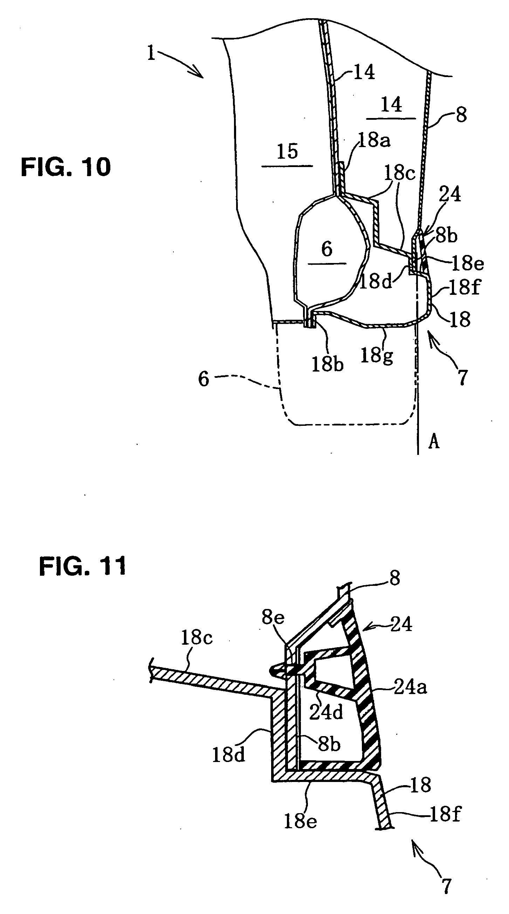

A second embodiment will be described referring to FIGS. **9-11**. Herein, the same structures as the first embodiment are denoted by the same reference characters. FIG. **10** is a sectional view of that, which corresponds to FIG. **7** of the first embodiment.

The wheel-house arch portion **8** comprises the wheel house outer **14** which is positioned on the outside and the wheel house inner **15** which is positioned on the inside. The wheel house outer **14** and the wheel house inner **15** are joined at their both ends and upper ends so as to form the space for storing the rear wheel **6** at their central area.

As shown in FIG. **10**, the side sill outer **16** and the side sill reinforcement extend substantially rearwardly in the rear area of the vehicle body. The rear end area of the side sill reinforcement **18** contacts the wheel-house arch portion **8**, and the second upper flange **18a** and the second lower flange **18b** contact the outside face of the wheel house outer **14**, respectively, which are joined to the wheel house inner **15**.

The lower end portion **8b** of the wheel-house arch portion **8** is configured to have a concave portion which is concaved substantially toward the inside in the vehicle width direction so as to contact the second upper wall portion **18e** of the side sill reinforcement **18**. The lower end portion **8b** contacts the outside of the joint portion **18d** and these are welded together.

The second upper wall portion **18c** has the two-stage structure with the upper wall and the lower wall so as to enlarge its contact area with the wheel-house arch portion 8. The second closed cross section **20**, which is defined by the second upper wall portion 18e and the flat plate portion **18f**, in an area of the vehicle rear portion projects toward the outside beyond the boundary **A** of the outside face of the rear wheel 6.

As shown in FIG. **11**, a garnish **24** which is preferably made from resin is provided on the outside of the lower end portion 8b of the wheel-house arch portion **8**. The garnish **24** is preferably of a trigonal prism shape, and comprises a first face portion **24a** which is positioned on the outside, a second face portion **24b** which forms a front end face, a third face portion **24c** which forms a rear end face, and an engaging portion **24d** which projects toward the inside. The garnish **24** is attached to the vehicle body **1** with the engaging portion **24d** engaging with an engagement portion **8e** which is formed at the lower end portion **8b** of the wheel-house arch portion **8**.

The first face portion **24a** is flush with the surface of the wheel-house arch portion 8 at its upper portion, and extends substantially downwardly. Its lower end is flush with the flat plate portion **18f**.

Hereinafter, the operations and advantages of the side vehicle-body structure according to the second embodiment will be described.

Like the first embodiment, since the second closed cross section **20** is formed at the side sill reinforcement member **18** and protrudes toward the outside in the vehicle width direction from the outside boundary **A**, the resistance of chipping caused by sands, stones or the like during the vehicle traveling can be improved.

Further, since the second closed cross section **20** projects toward the outside from the outside boundary **A** and the garnish **24** may be arranged above the second closed cross section **20** so as to project outwardly as well, the aerodynamic characteristics can be improved by reducing the amount of traveling winds flowing into the wheel house. Moreover, since the shape of the garnish **24** may be changed, the joint face portion of the side sill outer **16** and the split line can be covered with the garnish **24** regardless of the design of the wheel-house arch portion **8**, so that the exterior appearance can be improved.

### EMBODIMENT 3

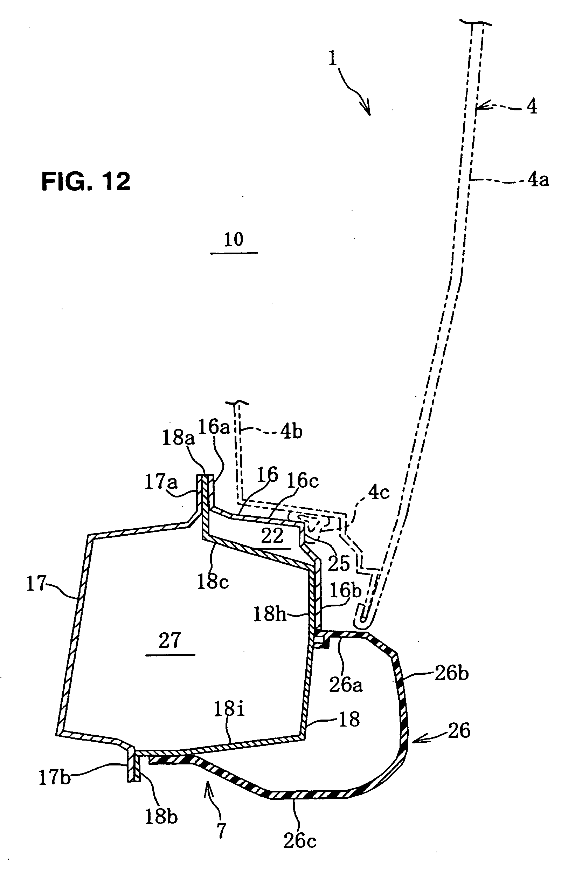

A third embodiment will be described referring to FIG. **12**. Herein, the same structures as the first embodiment are denoted by the same reference characters. FIG. **12** is a sectional view of that, which corresponds to FIG. **6** of the first embodiment.

The side sill **7** which is connected to the side frame outer **2** comprises the side sill outer **16** which is formed by the lower portion of the side frame outer **2**, the side sill inner **17** which is positioned on the inside of the side sill outer **16**, and the side sill reinforcement **18**. A side sill garnish **26** which is preferably made from resin is attached to an outside face of the side sill reinforcement **18**.

The hat-shaped side sill reinforcement **18** is arranged between the inside hat-shaped side sill inner **17** and the outside side sill outer **16**, and the first upper flange **17a** and the first lower flange **17b** of the side sill inner **17** are welded to the second upper flange **18a** and the second lower flange **18b** of the side sill reinforcement **18**, respectively.

The cross section of the side sill reinforcement **18** is comprised of a first upper wall portion **18c** which extends substantially toward the outside continuously from the lower end of the second upper flange **18a**, a flat-shaped side wall portion **18h** which extends substantially downwardly continuously from the outside end of the first upper wall portion **18c**, and a lower wall portion **18i** which extends substantially toward the inside from a lower end of the side wall portion **18h** and connects to the upper end of the second lower flange **18b**. Herein, the first upper wall portion **18c**, the side wall portion **18h**, and the lower wall portion **18i** form respective faces which extend in the vehicle longitudinal direction. The side sill reinforcement **18** and the side sill inner **17** form a fifth closed cross section **27** which extends in the vehicle longitudinal direction.

The rear opening **10** is formed at the rear side of the vehicle body behind the center pillar **13**. The first upper flange **17a**, the second upper flange **18a** and the third upper flange **16a** which forms the edge of the rear opening **10** above the third lower flange **16b** of the side sill outer **16** are welded together. The projection portion **16c** which extends toward the outside continuously from the lower end of the third upper flange **16a** is arranged facing to the first upper wall portion **18c** and forms the fourth closed cross section **22** together with the first upper wall portion **18c**. The third lower flange **16b** extends downwardly from the outside end of the projection portion 16c.

The third lower flange **16b** extends downwardly toward the central portion of the flat-shaped side wall portion **18h** and contacts and is welded to the outside face of the side wall portion **18d**.

The side sill garnish **26** comprises an upper wall portion **26a** which extends toward the outside beyond the lower end of the rear door **4**, a flat-shaped side wall portion **26b** which extends downwardly continuously from the upper wall portion **26a**, and a lower wall portion **26c** which projects downwardly from a lower end portion of the side wall portion **26b** and the lower end portion **18b** of the second lower flange **18b** and extends to the second lower flange **18b**. The side sill garnish **26** is attached to a front end, a central portion and a rear end of the vehicle body, preferably via screws or the like, respectively.

The upper wall portion **26a** contacts the surface of the side wall portion **18h** at its inside end and contacts the lower cross section of the third lower flange **16b** of the side sill outer **16**. The lower wall portion **26c** contacts the lower face of the lower wall portion **18i** at its upper face on its inside portion. In the present embodiment, the side sill garnish **26** corresponds to the projection portion of the present invention.

Hereinafter, the operations and advantages of the side vehicle-body structure according to the third embodiment will be described.

Like the first embodiment, since the side sill garnish **26** projects toward the outside in the vehicle width direction beyond the lower end portion of the rear door 4, the resistance of chipping caused by sands, stones or the like during the vehicle traveling can be improved.

Since the upper wall portion **26a** contacts the lower cross section of the third lower flange **16b** of the side sill outer **16**, the lower cross section of the third flange **16b** can be made be recognized as one body with the side sill garnish **26**.

Moreover, since the side sill garnish **26** is formed so as to project toward the outside in front of the rear wheel **6**, the aerodynamic characteristics can be improved by reducing the amount of the traveling air flowing into the wheel house. Further, since the shape of the side sill garnish **26** is changed properly, the flexibility of designing can be increased.

Hereinafter, alternatives which are partially modified from the above-described embodiments will be described.
1] While the example in which the side frame outer and the side sill outer are formed integrally was described in the above-described embodiments, the present invention is applicable to another case in which they are formed separately, which performs the similar advantages.
2] While the example in which the third lower flange of the side sill outer extends downwardly and contacts the projection portion was described in the above-described embodiments, the present invention is applicable to another case in which there exists a small gap formed between the lower cross section (split line) and the projection portion, or the third lower flange extends downwardly obliquely with a specified slant angle, as long as at least the lower cross section (split line) of the third lower flange can be made be recognized as one body with the projection portion, which performs the similar advantages.
3] Any other modifications and improvements may be applied within the scope of the present invention, as defined by the appended claims.

## Claims

1. A side vehicle-body structure of an automotive vehicle (**1**), comprising:
a side body outer panel (**2**) forming a surface of a vehicle-body side portion; and
a side sill (**7**) extending substantially in a vehicle longitudinal direction and connected to said side body outer panel (**2**),
wherein said side sill (**7**) includes a side sill outer (**16**) which is provided at a lower portion of said side body outer panel (**2**), a side sill inner (**17**) which is provided on the inside of the side sill outer (**16**) in a vehicle width direction, a reinforcement member (**18**) which is provided between the side sill inner (**17**) and the side sill outer (16) and joined to a joint face portion (**16b**) of the side sill outer (**16**), and a projection portion (**20**; **26**) which projects substantially toward the outside in the vehicle width direction from said joint face portion (**16b**),
**characterized in that**
an upper wall portion (**18e**; **26a**) of said projection portion (**20**; **26**) is arranged substantially at the same level as a lower end of said joint face portion (**16b**).

2. The side vehicle-body structure of an automotive vehicle (**1**) of claim 1, wherein said reinforcement member (**18**) is substantially plate-shaped.

3. The side vehicle-body structure of an automotive vehicle (**1**) of claim 1 or 2, wherein a side door (**4**) which opens or closes an opening (**10**) formed at said side body outer panel (**2**) is provided, and said lower end of the joint face portion (**16b**) of the side sill outer (**16**) and a lower end portion of the side door (**4**) are arranged substantially at the same level, and/or said side door (**4**) has a seal member (**4c**) which seals a space between the side door (**4**) and said side sill (**7**) when the side door (**4**) closes, and/or said side sill outer (**16**) includes a seal face portion (**25**) which contacts said seal member (**4c**), preferably an upper portion thereof.

4. The side vehicle-body structure of an automotive vehicle (**1**) of any one or more of the preceding claims, wherein said side body outer panel (**2**) includes a wheel house portion which stores a rear wheel (**6**) at a rear portion thereof and a wheel-house arch portion (**8**) which forms a substantially continuous surface with the closing side door (**4**) between said wheel house portion and the side door (**4**), and a lower end portion (**8b**) of the wheel-house arch portion (**8**) is arranged substantially at the same level as said lower end of the joint face portion (**16b**).

5. The side vehicle-body structure of an automotive vehicle (**1**) of any one or more of the preceding claims 2 to 4, wherein a garnish (**24**) is provided so as to cover said lower end portion (**8b**) of the wheel-house arch portion (**8**) and/or said upper wall portion (**18e**) of the projection portion (**20**) in an area adjacent to said wheel-house arch portion.

6. The side vehicle-body structure of an automotive vehicle (**1**) of any one or more of the preceding claims, wherein said projection portion (**20**; **26**) projects toward the outside from an outside boundary face of the rear wheel (**6**).

7. The side vehicle-body structure of an automotive vehicle (**1**) of any one or more of the preceding of claims, wherein said projection portion (**20**) is formed at said reinforcement member (**18**) and comprised of a protrusion portion (**20**) which protrudes toward the outside in the vehicle width direction from said joint face portion (**16b**).

8. The side vehicle-body structure of an automotive vehicle (**1**) of claim 7, wherein said protrusion portion (**20**) protrudes toward the outside in the vehicle width direction from the lower end of the side door (**4**) when the side door (**4**) closes.

9. The side vehicle-body structure of an automotive vehicle (**1**) of any one or more of the preceding claims, wherein said side sill (**7**) comprises a flange (**23**) which comprises a lower end portion (**17b**) of the side sill inner (**17**) and a lower end portion (**18b**) of said reinforcement member (**18**), and7or said protrusion portion (**20**) comprises a step portion (**18g**) which projects downwardly, preferably beyond said flange (**23**).

10. The side vehicle-body structure of an automotive vehicle (**1**) of any one or more of the preceding claims 7 through 9, wherein said protrusion portion (**20**) comprises a substantially flat plate portion (**18f**) which extends substantially downwardly on the outside.

11. The side vehicle-body structure of an automotive vehicle (**1**) of any one or more of the preceding claims, wherein said side body outer panel (**2**) includes a wheel house portion which stores a rear wheel (**6**) at a rear portion thereof and a wheel-house arch portion (**8**) which forms a substantially continuous surface with the closing side door (**4**) between said wheel house portion and the side door (**4**), a garnish (**24**) is provided so as to cover a lower end portion of said wheel-house arch portion (**8**) and said upper wall portion (**18e**) of the projection portion (**20**) in an area adjacent to said wheel-house arch portion (**8**), and/or said garnish (**24**) comprises a garnish face portion (**24a**) which is substantially flush with a surface of the wheel-house arch portion (**8**) and/or said flat plate portion (**18f**) of the protrusion portion (**20**).

12. The side vehicle-body structure of an automotive vehicle (**1**) of any one or more of the preceding of claims, wherein said projection portion is comprised of a side sill garnish (**26**) which is attached to an outside face of said side sill (**7**).

13. The side vehicle-body structure of an automotive vehicle (**1**) of any one or more of the preceding claims, wherein said side sill outer (**16**) is formed integrally with said side body outer panel (**2**) and/or said projecting portion (**20**) is formed integrally with said reinforcement member (**18**).

14. A method of providing a side vehicle-body structure of an automotive vehicle (**1**), comprising the steps of:
providing a side body outer panel (**2**) forming a surface of a vehicle-body side portion; and
connecting a side sill (**7**) extending substantially in a vehicle longitudinal direction to said side body outer panel (**2**),
wherein said side sill (**7**) includes a side sill outer (**16**) which is provided at a lower portion of said side body outer panel (**2**), a side sill inner (**17**) which is provided on the inside of the side sill outer (**16**) in a vehicle width direction, a reinforcement member (**18**) which is provided between the side sill inner (**17**) and the side sill outer (**16**) and joined to a joint face portion (**16b**) of the side sill outer (**16**), and a projection portion (**20**; **26**) which projects substantially toward the outside in the vehicle width direction from said joint face portion (**16b**),
**characterized by**
arranging an upper wall portion (**18e**; **26a**) of said projection portion (**20**; **26**) substantially at the same level as a lower end of said joint face portion (**16b**).

15. The method of claim 14, further comprising the steps of:
forming said reinforcement member (**18**) such to be substantially plate-shaped.

## Patentansprüche

1. Fahrzeugkarosserieseitenstruktur eines Kraftfahrzeugs (1), die umfasst:
ein Karosserieseiten-Außenblech (2), das eine Oberfläche des Fahrzeugkarosserieseitenabschnitts bildet; und
einen Seitenschweller (7), der sich im Wesentlichen in einer Fahrzeuglängsrichtung erstreckt und mit dem Karosserieseiten-Außenblech (2) verbunden ist,
wobei der Seitenschweller (7) umfasst: ein Seitenschwelleräußeres (16), das in einem unteren Abschnitt des Karosserieseiten-Außenblechs (2) bereitgestellt ist, ein Seitenschwellerinneres (17), das in einer Fahrzeugbreitenrichtung auf der Innenseite des Seitenschwelleräußeren (16) bereitgestellt ist, ein Verstärkungselement (18), das zwischen dem Seitenschwellerinneren (17) und dem Seitenschwelleräußeren (16) bereitgestellt ist und mit einem Verbindungsflächenabschnitt (16b) des Seitenschwellenäußeren (16) verbunden ist, und einen Vorsprungabschnitt (20; 26), der von dem Verbindungsflächenabschnitt (16b) im Wesentlichen in der Fahrzeugbreitenrichtung nach außen vorsteht,
**dadurch gekennzeichnet, dass**
ein oberer Wandabschnitt (18e; 26a) des Vorsprungabschnitts (20; 26) im Wesentlichen auf der gleichen Höhe wie ein unteres Ende des Verbindungsflächenabschnitts (16b) angeordnet ist.

2. Fahrzeugkarosserieseitenstruktur eines Kraftfahrzeugs (1) nach Anspruch 1, wobei das Verstärkungselement (18) im Wesentlichen plattenförmig ist.

3. Fahrzeugkarosserieseitenstruktur eines Kraftfahrzeugs (1) nach Anspruch 1 oder 2, wobei eine Seitentür (4), die eine an dem Karosserieseiten-Außenblech (2) ausgebildete Öffnung (10) öffnet oder schließt, bereitgestellt ist, und das untere Ende des Verbindungsflächenabschnitts (16b) des Seitenschwelleräußeren (16) und ein unterer Endabschnitt der Seitentür (4) im Wesentlichen auf der gleichen Höhe angeordnet sind und/oder die Seitentür (4) ein Dichtungselement (4c) hat, das einen Raum zwischen der Seitentür (4) und dem Seitenschweller (7) abdichtet, wenn die Seitentür (4) sich schließt, und/oder das Seitenschwelleräußere (16) einen Dichtungsflächenabschnitt (25) umfasst, der das Dichtungselement (4c) vorzugsweise an seinem oberen Abschnitt berührt.

4. Fahrzeugkarosserieseitenstruktur eines Kraftfahrzeugs (1) nach einem oder mehreren der vorhergehenden Ansprüche, wobei das Karosserieseiten-Außenblech (2) einen Radkastenabschnitt, der ein Hinterrad (6) in seinem hinteren Abschnitt lagert, und einen Radkastenbogenabschnitt (8), der eine im Wesentlichen zusammenhängende Fläche mit der verschlossenen Seitentür (4) zwischen dem Radkastenabschnitt und der Seitentür (4) bildet, umfasst, und wobei ein unterer Endabschnitt (8b) des Radkastenbogenabschnitts (8) im Wesentlichen auf der gleichen Höhe wie das untere Ende des Verbindungsflächenabschnitts (16b) angeordnet ist.

5. Fahrzeugkarosserieseitenstruktur eines Kraftfahrzeugs (1) nach einem oder mehreren der vorhergehenden Ansprüche 2 bis 4, wobei eine Verzierung (24) bereitgestellt ist, um den unteren Endabschnitt (8b) des Radkastenbogenabschnitts (8) und/oder den oberen Wandabschnitt (18e) des Vorsprungabschnitts (20) in einem Bereich benachbart zu dem Radkastenbogenabschnitt zu bedecken.

6. Fahrzeugkarosserieseitenstruktur eines Kraftfahrzeugs (1) nach einem oder mehreren der vorhergehenden Ansprüche, wobei der Vorsprungabschnitt (20; 26) von einer äußeren Grenzfläche des Hinterrads (6) nach außen vorsteht.

7. Fahrzeugkarosserieseitenstruktur eines Kraftfahrzeugs (1) nach einem oder mehreren der vorhergehenden Ansprüche, wobei der Vorsprungabschnitt (20) an dem Verstärkungselement (18) ausgebildet ist und aus einem Vorsprungabschnitt (20) besteht, der von dem Verbindungsflächenabschnitt (16b) in der Fahrzeugbreitenrichtung nach außen vorsteht.

8. Fahrzeugkarosserieseitenstruktur eines Kraftfahrzeugs (1) nach Anspruch 7, wobei der Vorsprungabschnitt (20) von dem unteren Ende der Seitentür (4) in der Fahrzeugbreitenrichtung nach außen vorsteht, wenn die Seitentür (4) sich schließt.

9. Fahrzeugkarosserieseitenstruktur eines Kraftfahrzeugs (1) nach einem oder mehreren der vorhergehenden Ansprüche, wobei der Seitenschweller (7) einen Flansch (23) umfasst, der einen unteren Endabschnitt (17b) des Seitenschwellerinneren (17) und einen unteren Endabschnitt (18b) des Verstärkungselements (18) umfasst, und/oder wobei der Vorsprungabschnitt (20) einen Stufenabschnitt (18g) umfasst, der nach unten, vorzugsweise über den Flansch (23) hinaus, vorsteht.

10. Fahrzeugkarosserieseitenstruktur eines Kraftfahrzeugs (1) nach einem oder mehreren der vorhergehenden Ansprüche 7 bis 9, wobei der Vorsprungabschnitt (20) einen im Wesentlichen flachen Plattenabschnitt (18f) umfasst, der sich auf der Außenseite im Wesentlichen nach unten erstreckt.

11. Fahrzeugkarosserieseitenstruktur eines Kraftfahrzeugs (1) nach einem oder mehreren der vorhergehenden Ansprüche, wobei das Karosserieseiten-Außenblech (2) einen Radkastenabschnitt, der ein Hinterrad (6) in seinem hinteren Abschnitt lagert, und einen Radkastenbogenabschnitt (8), der eine im Wesentlichen zusammenhängende Fläche mit der verschlossenen Seitentür (4) zwischen dem Radkastenabschnitt und der Seitentür (4) bildet, umfasst, eine Verzierung (24) bereitgestellt ist, um einen unteren Endabschnitt des Radkastenbogenabschnitts (8) und den oberen Wandabschnitt (18e) des Vorsprungabschnitts (20) in einer Fläche benachbart zu dem Radkastenbogenabschnitt (8) zu bedecken, und/oder die Verzierung (24) einen Verzierungsflächenabschnitt (24a) umfasst, der im Wesentlichen bündig mit einer Fläche des Radkastenbogenabschnitts (8) und/oder dem flachen Plattenabschnitt (18f) des Vorsprungabschnitts (20) ist.

12. Fahrzeugkarosserieseitenstruktur eines Kraftfahrzeugs (1) nach einem oder mehreren der vorhergehenden Ansprüche, wobei der Vorsprungabschnitt aus einer Seitenschwellerverzierung (26) besteht, die an einer Außenfläche des Seitenschwellers (7) angebracht ist.

13. Fahrzeugkarosserieseitenstruktur eines Kraftfahrzeugs (1) nach einem oder mehreren der vorhergehenden Ansprüche, wobei das Seitenschwelleräußere (16) integral mit dem Karosserieseiten-Außenblech (2) ausgebildet ist und/oder der Vorsprungabschnitt (20) integral mit dem Verstärkungselement (18) ausgebildet ist.

14. Verfahren zur Bereitstellung einer Fahrzeugkarosserieseitenstruktur eines Kraftfahrzeugs (1), das die folgenden Schritte umfasst:
Bereitstellen eines Karosserieseiten-Außenblechs (2), das eine Oberfläche des Fahrzeugkarosserieseitenabschnitts bildet; und
Verbinden eines Seitenschwellers (7), der sich im Wesentlichen in einer Fahrzeuglängsrichtung erstreckt, mit dem Karosserieseiten-Außenblech (2),
wobei der Seitenschweller (7) umfasst: ein Seitenschwelleräußeres (16), das in einem unteren Abschnitt des Karosserieseiten-Außenblechs (2) bereitgestellt ist, ein Seitenschwellerinneres (17), das in einer Fahrzeugbreitenrichtung auf der Innenseite des Seitenschwelleräußeren (16) bereitgestellt ist, ein Verstärkungselement (18), das zwischen dem Seitenschwellerinneren (17) und dem Seitenschwelleräußeren (16) bereitgestellt ist und mit einem Verbindungsflächenabschnitt (16b) des Seitenschwellenäußeren (16) verbunden ist, und einen Vorsprungabschnitt (20; 26), der von dem Verbindungsflächenabschnitt (16b) im Wesentlichen in der Fahrzeugbreitenrichtung nach außen vorsteht,
**gekennzeichnet durch**
Anordnen eines oberen Wandabschnitts (18e; 26a) des Vorsprungabschnitts (20; 26) im Wesentlichen auf der gleichen Höhe wie ein unteres Ende des Verbindungsflächenabschnitts (16b).

15. Verfahren nach Anspruch 14, das ferner den folgenden Schritt umfasst:
Ausbilden des Verstärkungselements (18), so dass es im Wesentlichen plattenförmig ist.

## Revendications

1. Structure latérale de carrosserie de véhicule d'un véhicule automobile (1), comprenant :
un panneau externe latéral de carrosserie (2) formant une surface d'une portion latérale de carrosserie de véhicule ; et
un longeron (7) s'étendant essentiellement dans une direction longitudinale du véhicule et connecté audit panneau externe latéral de carrosserie (2),
dans laquelle ledit longeron (7) inclut un extérieur de longeron (16) qui est prévu au niveau d'une portion inférieure dudit panneau externe latéral de carrosserie (2), un intérieur de longeron (17) qui est prévu sur l'intérieur de l'extérieur de longeron (16) dans le sens de la largeur du véhicule, un élément de renforcement (18) qui est prévu entre l'intérieur de longeron (17) et l'extérieur de longeron (16) et relié à une portion de face commune (16b) de l'extérieur de longeron (16), et une portion de saillie (20 ; 26) qui fait essentiellement saillie vers l'extérieur dans le sens de la largeur du véhicule depuis ladite portion de face commune (16b),
**caractérisée en ce que**
une portion de paroi supérieure (18e ; 26a) de ladite portion de saillie (20 ; 26) est agencée essentiellement au même niveau qu'une extrémité inférieure de ladite portion de face commune (16b).

2. Structure latérale de carrosserie de véhicule d'un véhicule automobile (1) selon la revendication 1, dans laquelle ledit élément de renforcement (18) est essentiellement en forme de plaque.

3. Structure latérale de carrosserie de véhicule d'un véhicule automobile (1) selon la revendication 1 ou 2, dans laquelle une portière latérale (4) qui ouvre ou ferme une ouverture (10) formée au niveau dudit panneau externe latéral de carrosserie (2) est prévue, et ladite extrémité inférieure de la portion de face commune (16b) de l'extérieur de longeron (16) et une portion d'extrémité inférieure de la portière latérale (4) sont agencées essentiellement au même niveau, et/ou ladite portière latérale (4) possède un élément d'étanchéité (4c) qui scelle un espace entre la portière latérale (4) et ledit longeron (7) lorsque la portière latérale (4) ferme, et/ou ledit extérieur de longeron (16) inclut une portion de face d'étanchéité (25) qui vient en contact avec ledit élément d'étanchéité (4c), de préférence une portion supérieure de celui-ci.

4. Structure latérale de carrosserie de véhicule d'un véhicule automobile (1) selon l'une quelconque ou plusieurs des revendications précédentes, dans laquelle ledit panneau externe latéral de carrosserie (2) inclut une portion de passage de roue qui stocke une roue arrière (6) au niveau d'une portion arrière de celle-ci et une portion d'arc de passage de roue (8) qui forme une surface essentiellement continue avec la portière latérale (4) qui se ferme entre ladite portion de passage de roue et la portière latérale (4), et une portion d'extrémité inférieure (8b) de la portion d'arc de passage de roue (8) est agencée essentiellement au même niveau que ladite extrémité inférieure de la portion de face commune (16b).

5. Structure latérale de carrosserie de véhicule d'un véhicule automobile (1) selon l'une quelconque ou plusieurs des revendications précédentes 2 à 4, dans laquelle une garniture (24) est prévue de manière à recouvrir ladite portion d'extrémité inférieure (8b) de la portion d'arc de passage de roue (8) et/ou ladite portion de paroi supérieure (18e) de la portion de saillie (20) dans une zone adjacente à ladite portion d'arc de passage de roue.

6. Structure latérale de carrosserie de véhicule d'un véhicule automobile (1) selon l'une quelconque ou plusieurs des revendications précédentes, dans laquelle ladite portion de saillie (20 ; 26) fait saillie vers l'extérieur depuis une face limite extérieure de la roue arrière (6).

7. Structure latérale de carrosserie de véhicule d'un véhicule automobile (1) selon l'une quelconque ou plusieurs des revendications précédentes, dans laquelle ladite portion de saillie (20) est formée au niveau dudit élément de renforcement (18) et constituée d'une portion de débordement (20) qui déborde vers l'extérieur dans le sens de la largeur du véhicule depuis ladite portion de face commune (16b).

8. Structure latérale de carrosserie de véhicule d'un véhicule automobile (1) selon la revendication 7, dans laquelle ladite portion de débordement (20) déborde vers l'extérieur dans le sens de la largeur du véhicule depuis l'extrémité inférieure de la portière latérale (4) lorsque la portière latérale (4) se ferme.

9. Structure latérale de carrosserie de véhicule d'un véhicule automobile (1) selon l'une quelconque ou plusieurs des revendications précédentes, dans laquelle ledit longeron (7) comprend une bride (23) qui comprend une portion d'extrémité inférieure (17b) de l'intérieur de longeron (17) et une portion d'extrémité inférieure (18b) dudit élément de renforcement (18), et/ou ladite portion de débordement (20) comprend une portion de marche (18g) qui fait saillie vers le bas, de préférence au-delà de ladite bride (23).

10. Structure latérale de carrosserie de véhicule d'un véhicule automobile (1) selon l'une quelconque ou plusieurs des revendications précédentes 7 à 9, dans laquelle ladite portion de débordement (20) comprend une portion de plaque essentiellement plate (18f) qui s'étend essentiellement vers le bas sur l'extérieur.

11. Structure latérale de carrosserie de véhicule d'un véhicule automobile (1) selon l'une quelconque ou plusieurs des revendications précédentes, dans laquelle ledit panneau externe latéral de carrosserie (2) inclut une portion de passage de roue qui stocke une roue arrière (6) au niveau d'une portion arrière de celle-ci et une portion d'arc de passage de roue (8) qui forme une surface essentiellement continue avec la portière latérale (4) qui se ferme entre ladite portion de passage de roue et la portière latérale (4), une garniture (24) est prévue de manière à recouvrir une portion d'extrémité inférieure de ladite portion d'arc de passage de roue (8) et ladite portion de paroi supérieure (18e) de la portion de saillie (20) dans une zone adjacente à ladite portion d'arc de passage de roue (8), et/ou ladite garniture (24) comprend une portion de face de garniture (24a) qui est essentiellement à fleur avec une surface de la portion d'arc de passage de roue (8) et/ou ladite portion de plaque plate (18f) de la portion de débordement (20).

12. Structure latérale de carrosserie de véhicule d'un véhicule automobile (1) selon l'une quelconque ou plusieurs des revendications précédentes, dans laquelle ladite portion de saillie est constituée d'une garniture de longeron (26) qui est reliée à une face extérieure dudit longeron (7).

13. Structure latérale de carrosserie de véhicule d'un véhicule automobile (1) selon l'une quelconque ou plusieurs des revendications précédentes, dans laquelle ledit extérieur de longeron (16) est intégralement formé dudit panneau externe latéral de carrosserie (2) et/ou ladite portion de saillie (20) est intégralement formée dudit élément de renforcement (18).

14. Procédé de fourniture d'une structure latérale de carrosserie de véhicule d'un véhicule automobile (1), comprenant les étapes consistant à :
fournir un panneau externe latéral de carrosserie (2) formant une surface d'une portion latérale de carrosserie de véhicule ; et
connecter un longeron (7) s'étendant essentiellement dans une direction longitudinale du véhicule audit panneau externe latéral de carrosserie (2),
dans lequel ledit longeron (7) inclut un extérieur de longeron (16) qui est prévu au niveau d'une portion inférieure dudit panneau externe latéral de carrosserie (2), un intérieur de longeron (17) qui est prévu sur l'intérieur de l'extérieur de longeron (16) dans le sens de la largeur du véhicule, un élément de renforcement (18) qui est prévu entre l'intérieur de longeron (17) et l'extérieur de longeron (16) et relié à une portion de face commune (16b) de l'extérieur de longeron (16), et une portion de saillie (20 ; 26) qui fait essentiellement saillie vers l'extérieur dans le sens de la largeur du véhicule depuis ladite portion de face commune (16b),
**caractérisé par**
l'agencement d'une portion de paroi supérieure (18e ; 26a) de ladite portion de saillie (20 ; 26) essentiellement au même niveau qu'une extrémité inférieure de ladite portion de face commune (16b).

15. Procédé selon la revendication 14, comprenant en outre les étapes consistant à :
former ledit élément de renforcement (18) de manière à être essentiellement en forme de plaque.
